# EUROPEAN PATENT APPLICATION

(11) **EP 3 632 973 A1**
(43) Date of publication of application: **08.04.2020**
(21) Application number: 18197899.0
(22) Date of filing: 01.10.2018
(51) Int. Cl.: C08K 5/00, C08K 3/013, C08L 7/00

(54) **METHOD OF PREPARING VULCANIZABLE RUBBER COMPOSITES**

(71) Applicant: Trinseo Europe GmbH, 8810 Horgen (CH)
(72) Inventor: Ilisch, Sybill, 06217 Merseburg (DE); Kühn, Martin, Leizpzig (DE); Hesse, Sandra, Landsberg OT Queis (DE); Heidenreich, Daniel, 06110 Halle (DE)
(74) Representative: Hoffmann Eitle

(57) **Abstract**

The invention relates to a method of preparing an intermediate rubber composite and to the intermediate rubber composite thus obtainable. In accordance with the invention, polyethylene glycol (PEG) and slow or semi-fast vulcanization accelerator are added to and mixed with a rubber component prior to the addition of filler. The present invention further relates to a method of preparing a vulcanizable rubber composite, involving the method of preparing an intermediate rubber composite, and to the vulcanizable rubber composite thus obtainable. The present invention yet further relates to a method of producing a cured rubber article, by producing a vulcanizable rubber composite in accordance with the invention and curing the vulcanizable rubber composite. Finally, the present invention concerns the cured rubber article, which is preferably a tire or tire component.

## Description

### FIELD OF THE INVENTION

The present invention is directed to a method of preparing an intermediate rubber composite and to the intermediate rubber composite thus obtainable. The present invention further relates to a method of preparing a vulcanizable rubber composite, including the method of preparing an intermediate rubber composite, and to the vulcanizable rubber composite thus obtainable. The present invention yet further relates to a method of producing a cured rubber article, by producing a vulcanizable rubber composite in accordance with the invention and curing the vulcanizable rubber composite. Finally, the present invention concerns the cured rubber article, which is preferably a tire or tire component.

### BACKGROUND OF THE INVENTION

Cured rubber articles are conventionally produced by compounding rubber, i.e. natural rubber and/or synthetic rubber, with filler and a vulcanization system comprising sulfur and one or more vulcanization accelerators to provide a vulcanizable rubber composite, molding the vulcanizable rubber composite to provide a molded rubber article, and subsequently heating and, thus, curing the molded rubber article. In the compounding process, additional components may be added, for example activators, age resistors (antidegredants), softeners (plasticizers) and other functional components such as homogenizing agents, retarders etc., depending on the application of the cured rubber article.

Vulcanizable rubber composites are multicomponent systems which are typically produced in batch compound processes in internal mixers, at batch volumes of 300 liters or more. The mixing (compounding) process typically includes two or more and as much as 7 mixing steps in which the components are added stepwise and under special mixing conditions. At the end of each mixing step, the raw mixture (intermediate rubber composite) is required to have a consistency which allows the further processing with an extruder or on two-roll mills and batch-off equipment, before it is stored in the shape of a zig-zag belt for a period of a few hours up to several days. The aim is to obtain a satisfactory filler dispersion at the end of the mixing process, and the viscosity of the vulcanizable rubber composite thus obtained should allow further processing by, e.g., extrusion, i.e. requiring CML < 100 MU (CML = Compound Mooney, measured with a large rotor; MU = Mooney units).

Rubber composites used for forming the tread of ultrahigh performance passenger car tires contain silica and silane compounds in order to meet the required wet skid performance, low rolling resistance and tire lifetime (abrasion resistance). The multitude of components of rubber composites makes the manufacture and processing of rubber composites an increasing challenge, and the internal mixer more and more becomes a "reaction vessel", especially in the case of functionalized rubbers. The formulation of the rubber composites, the mixing parameters and the mode of adding the various components will significantly affect the reactions within the rubber components and, inherently, the viscosity of the rubber composites.

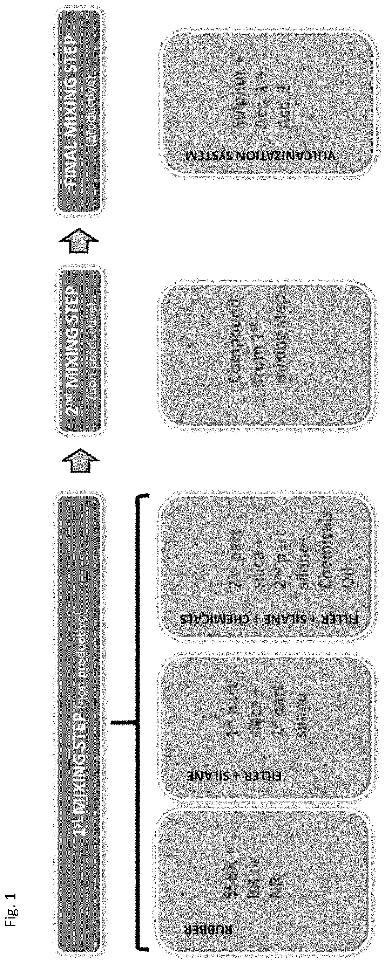

For example, in a conventional 3-step mixing process as shown Figure 1, a vulcanizable rubber composite is produced from a rubber component, for instance a combination of S-SBR with BR and/or NR, filler (silica), a silane compound, a vulcanization system comprising sulfur and two vulcanization accelerators, and further components such as zinc oxide and stearic acid, antioxidants, antiozonants and plasticizer (oil). In a first, non-productive mixing step, first parts of the filler and the silane compound are added to and mixed with the rubber component, followed by the addition of second parts of the filler and the silane compound as well as the further components. In this first mixing step, at mixing times of between 3 and 8 minutes, mass temperatures of up to 160 °C are reached. In the case of using silica and silane compound, mass temperatures of at least 140 °C are usually necessary for at least 2 minutes in order to achieve an appropriate reaction between these components and for removing the reaction product ethanol.

After the first mixing step in this example, the intermediate rubber composite is stored for at least 8 hours, allowing for cooling down, relaxation and diffusion processes. Subsequently, the intermediate rubber composite is once again subjected to a second, non-productive mixing step, thus applying thermal-mechanical stress in order to improve filler dispersion and reduce viscosity of the rubber composite. Usually, the second mixing step is shorter than the first one and reaches slightly lower mass temperatures.

In the final, productive mixing step, the vulcanization system is added which contains sulfur and an accelerator package including one or more vulcanization accelerators. In this step, it is necessary to keep the mass temperature at not more than 120 °C in order to prevent scorching. At the end of the mixing, the vulcanizable rubber composite is obtained.

It has been found in this art that the viscosity of the rubber composite throughout the various mixing stages sometimes increases such that the further processing of the vulcanizable composite obtained in the final productive mixing step, for example by extrusion, is hindered or even no longer possible at all. This is particularly so in the compounding process of high performance rubber composites filled with silica and containing highly functionalized solution styrene butadiene rubber (S-SBR), which may only be obtained in the shape of crumbles. This has led tire manufacturers to replace high performance rubber composites with less challenging rubber composite grades, at the expense of a deteriorated tire performance.

In view of the above, the present invention aims at improving the processability of rubber composites, as reflected by a reduced viscosity of intermediate or final rubber composites, especially silica-filled rubber composites, and by an improved appearance and dimensional accuracy of extruded profiles.

### SUMMARY OF THE INVENTION

The present invention is based on the finding that the disadvantages of the prior art as elaborated above can be overcome by changing the process for producing a vulcanizable rubber composite such that part of the vulcanization system, which is conventionally added last, namely in the productive mixing step, is added to and mixed with the rubber components in the first mixing step and prior to the addition of filler. In addition, the teaching of the present invention requires that a specific processing aid be added to and mixed with the rubber components in the first mixing step and prior to the addition of filler. In accordance with the instant invention, the part of the vulcanization system to be added in the first mixing step is slow or semi-fast vulcanization accelerator as defined herein. Moreover, in accordance with the instant invention, the specific processing aid to be added in the first mixing step is polyethylene glycol (PEG) as defined herein. The specific part of the vulcanization system and the specific processing aid may be added to and mixed with the rubber components together or in arbitrary order in the first mixing step, as long as they are added to and mixed with the rubber components prior to the addition of filler.

The effects of the invention in terms of processability become apparent both in the intermediate rubber composite obtained after the first, non-productive mixing step (and in any subsequent non-productive mixing step), and in the final, productive mixing step. Surprisingly, the inventors further found that physical-mechanical and performance parameters of rubber articles produced from the vulcanizable rubber composites of the present invention are improved. Without wishing to be bound by theory, the inventors assume that the early addition of the slow or semi-fast accelerator, together with PEG, in the first mixing step allows the accelerator to interact with the filler surface, thus hindering or shifting the direct reaction between the filler surface and functional groups of the rubber components.

In a first aspect, the present invention provides a method of producing an intermediate rubber composite comprising (i) a rubber component comprising one or more of natural rubber and synthetic rubber, (ii) filler, (v) polyethylene glycol (PEG), and (vi) one or more of slow and semi-fast vulcanization accelerators, and not containing (iii) sulfur and (iv) fast or ultra-fast vulcanization accelerators, wherein the method comprises a step (A) of providing the rubber component (i), adding filler (ii) and mixing the rubber component (i) and filler (ii) to obtain the intermediate rubber composite, characterized in that in step (A), the polyethylene glycol (PEG) (v) and the slow or semi-fast vulcanization accelerator (vi) are added to and mixed with the rubber component (i) prior to the addition of filler (ii).

In a second aspect, the present invention provides an intermediate rubber composite comprising (i) a rubber component comprising one or more of natural rubber and synthetic rubber, (ii) filler, (v) polyethylene glycol (PEG), and (vi) one or more of slow and semi-fast vulcanization accelerators, and not containing (iii) sulfur and (iv) fast or ultra-fast vulcanization accelerators, which intermediate rubber composite is obtainable or obtained by the method of producing an intermediate rubber composite according to the first aspect of the invention, or any one of its embodiments.

In a third aspect, the present invention provides a method of producing a vulcanizable rubber composite comprising (i) a rubber component comprising one or more of natural rubber and synthetic rubber, (ii) filler, (iii) sulfur, (iv) one or more of fast and ultra-fast vulcanization accelerators, (v) polyethylene glycol (PEG), and (vi) one or more of slow and semi-fast vulcanization accelerators, wherein the method comprises producing an intermediate rubber composite by conducting the method according to the first aspect of the invention, or any one of its embodiments, and a step (Z) of adding sulfur (iii) and fast or ultra-fast vulcanization accelerator (iv) to the intermediate rubber composite, followed by mixing, to obtain the vulcanizable rubber composite.

In a fourth aspect, the present invention provides a vulcanizable rubber composite comprising (i) a rubber component comprising one or more of natural rubber and synthetic rubber, (ii) filler, (iii) sulfur, (iv) one or more of fast and ultra-fast vulcanization accelerators, (v) polyethylene glycol (PEG), and (vi) one or more of slow and semi-fast vulcanization accelerators, which vulcanizable rubber composite is obtainable or obtained by the method of producing a vulcanizable rubber composite according to the third aspect of the invention, or any one of its embodiments.

In a fifth aspect, the present invention provides a method of producing a cured rubber article comprising the steps of producing a vulcanizable rubber composite by conducting the method according to the third aspect of the invention, or any one of its embodiments, molding the vulcanizable rubber composite to obtain a molded rubber article, and curing the molded rubber article by heating to obtain a cured rubber article.

In a sixth aspect, the present invention provides a cured rubber article which is obtainable or obtained by the method according to the fifth aspect of the invention, or any one of its embodiments.

### DRAWINGS

Figure 1 is an example of a conventional mixing regime for producing a vulcanizable rubber composite.

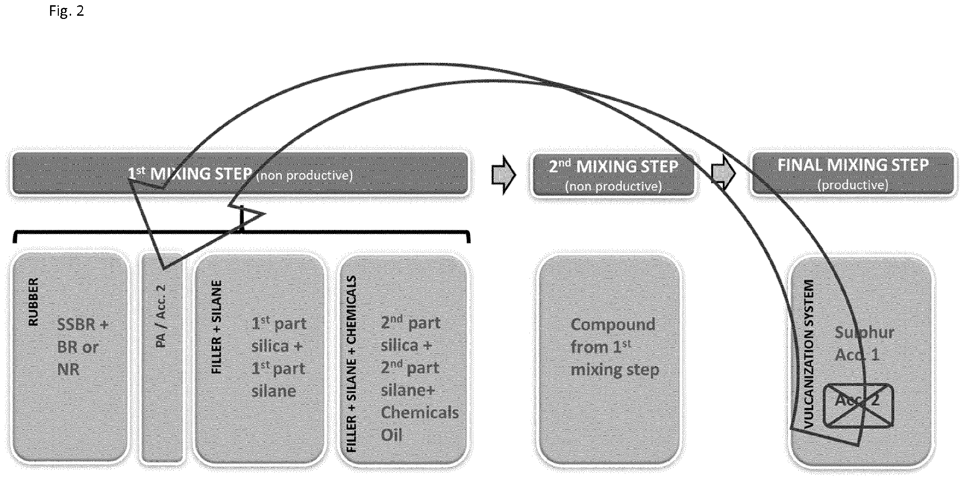

Figure 2 is an example of a mixing regime for a producing vulcanizable rubber composite in accordance with the present invention (Acc. 1 = fast or ultra-fast vulcanization accelerator; Acc. 2 = slow or semi-fast vulcanization accelerator, PA = processing aid PEG).

### DETAILED DESCRIPTION

### RUBBER COMPONENT

The rubber component (i) used in the present invention comprises (or is) one or more of natural rubber and synthetic rubber. Synthetic rubber includes, but is not limited to butadiene rubber (BR), isoprene rubber (IR), styrene isoprene rubber (SIR), styrene butadiene rubber (SBR) and styrene isoprene butadiene rubber (SIBR). Butadiene rubber includes low-cis polybutadiene rubber (LCBR) and high-cis polybutadiene rubber (HCBR). Styrene butadiene rubber includes solution styrene butadiene rubber (S-SBR) and emulsion styrene butadiene rubber (E-SBR). Styrene isoprene rubber includes solution styrene isoprene rubber (S-SIR). Styrene isoprene butadiene rubber includes solution styrene isoprene butadiene rubber (S-SIBR).

The natural or synthetic rubber may be backbone-functionalized, terminally functionalized or coupled. The rubber component (i) is preferably one or more selected from the group consisting of BR, S-SBR, backbone-modified BR, terminally modified BR, coupled BR, backbone-modified S-SBR, terminally modified S-SBR and coupled S-SBR. The term coupled S-SBR is not limited with respect to its symmetry, thus including symmetric and asymmetric coupled S-SBR. Furthermore, the polymer coupling may be reversible, e.g. the coupling point may break in the course of the manufacture of the intermediate rubber composite.

### FILLER

The filler (ii) can by any filler conventionally used in the manufacture of rubber composites which are used, e.g., in the manufacture of tires. For example, the filler is preferably one or more selected from the group consisting of carbon black, carbon nanotubes, graphite, graphene, silica, carbon-silica dual-phase filler, clay, calcium carbonate, magnesium carbonate, lignin, glass particle-based fillers. More preferably, the filler is a silica filler and even more preferable a silica filler selected from the group consisting of precipitated silica and fumed silica.

The filler (ii), especially the silica filler, preferably has a specific BET or CTAB surface area of from 150 to 300 m²/g, more preferably from 180 to 250 m²/g.

The filler (ii), especially the silica filler, preferably has a pH value in the range of from 5.0 to 9.0, more preferably from 6.0 to 7.0.

Filler can be used in the present invention in relative amounts which are conventional in this field. Preferably, silica as a filler is used in a total amount of from 20 to 150 phr (parts per hundred parts of rubber), or 5 to 40 vol%, more preferably from 60 to 100 phr, or 15 to 30 vol%, even more preferably from 80 to 100 phr, or 20 to 25 vol%.

It is preferred that the total amount of the filler used in the method of the present invention is added in step (A) (first mixing step), prior to the addition of the filler. Still, the inventors envisage that a certain proportion thereof could also be added in a subsequent mixing step, in particular in a mixing step (C) following a storing step (B) after step (A). Preferably, at least 50 wt%, more preferably at least 80 wt% and even more preferably all of the filler is added in step (A).

### POLYETHYLENE GLYCOL

PEG (v) is used in the present invention as a processing aid. It has a molecular weight (weight average, Mw) in the range of from 100 to 10,000 g/mol, preferably from 150 to 8,000 g/mol, more preferably from 200 to 2,000 g/mol.

PEG can be added in the method of the present invention in a total amount of from 0.5 to 10 phr, preferably from 1 to 5 phr. While it is preferred that all of the PEG is added in step (A) (first mixing step), prior to the addition of the filler, the inventors envisage that a certain proportion thereof could also be added after the addition of the filler, in a later stage of step (A) or in a subsequent mixing step, in particular in a mixing step (C) following a storing step (B) after step (A). Preferably, at least 50 wt%, more preferably at least 80 wt% and even more preferably all of the PEG is added in step (A), prior to the addition of the filler.

PEG can be added in step (A) in various ways. For example, it could be added as such, or as a blend with another component, such as the rubber component, the slow or semi-fast vulcanization accelerator, or an extender oil. Preferably, PEG is added as such in step (A).

### VULCANIZATION ACCELERATORS

Together with sulfur, a vulcanization accelerator forms part of a vulcanization system. A vulcanization accelerator is a chemical which is added to a rubber composite in order to increase the speed of vulcanization and to permit vulcanization to proceed at lower temperature and with greater efficiency.

Vulcanization accelerators are generally classified in accordance with their accelerating effect, as summarized in the following table:

| Accelerating effect | Type | Embodiments (Abbreviation, chemical name) | |
|---|---|---|---|
| Ultra-fast | Dithiocarbamate | ZDMC | Zinc-dimethyldithiocarbamate |
| | | ZDEC | Zinc-diethyldithiocarbamate |
| | | ZDBC | Zinc-dibutyldithiocarbamate |
| | | ZBED | Zinc-dibenzyldithiocarbamate |
| | | ZDBCX | Zinc-N,N-di-n-butyldithiocarbamate/di-n-butylamine complex |
| | | CuDD | Copper-dimethyldithiocarbamate |
| | | TDEC | Tellurium-diethyldithiocarbamate |
| | | SAA-30 | 2,2'-Dithiodiethylammonium-bis-dibenzyldithiocarbamate |
| | | ZBEC | Zinc-dibenzyldithiocarbamate |
| | | ZEPC | Zinc-ethylphenyldithiocarbamate |
| | Thiuram | TMTD | Tetramethylthiuramdisulfide |
| | | TMTM | Tetramethylthiurammonosulfide |
| | | TETD | Tetraethylthiuramdisulfide |
| | | DPTT | Dipentamethylenethiuramtetrasulfide |
| | | TBzTD | Tetrabenzylthiuramdisulfide |
| | | IBTD | Tetraisobutylthiuramdisulfide |
| | | MPTD | Dimethyldiphenylthiuramdisulfide |
| | | TBTD | Tetrabutylthiuramdisulfide |
| | Dithiophosphate | ZAT | Zinc-dialkyldithiophosphate, such as zinc-dibutyldithiophosphate (ZDBP) |
| Fast | Thiourea | ETU | N,N'-Ethylenethiourea |
| | | DETU | N,N'-Diethylthiourea |
| | | DPTU | N,N'-Diphenylthiourea |
| Semi-fast | Thiazole (Mercapto) | MBT | 2-Mercaptobenzothiazole |
| | | MBTS | Dibenzothiazoledisulfide |
| | | ZMBT | Zinc-2-mercaptobenzothiazol |
| | Sulfenamide | CBS | N-Cyclohexyl-2-benzothiazolesulfenamide |
| | | TBBS | N-tert-Butyl-2-benzothiazolesulfenamide |
| | | MBS | N-Morpholinyl-2-benzothiazylsulfenamide |
| | | DCBS | N,N'-Dicyclohexyl--2-benzothiazylsulfenamide |
| | | DEBS | N-Diethyl-3-benzothiazyl-sulfenamide |
| Slow | Guanidine | DPG | Diphenylguanidine |
| | | DOTG | Di-o-tolylguanidine |
| | | OTBG | Ortho-Tolylbiguanide |

In the present invention, the slow or semi-fast vulcanization accelerator (vi) is one or more selected from the group consisting of guanidine-type accelerators, sulfenamide-type accelerators and thiazole-type (mercapto-type) accelerators, preferably one or more selected from the group consisting of DPG, DOTG, OTBG, CBS, TBBS, MBS, DCBS, DEBS, MBT, MBTS and ZMBT.

Slow or semi-fast vulcanization accelerator can be added in the method of the present invention in relative amounts which are conventional in this field, preferably in a total amount of from 1 to 10 phr, more preferably from 3 to 5 phr. While it is preferred that all of the slow or semi-fast vulcanization accelerator is added in step (A) (first mixing step), prior to the addition of the filler, the inventors envisage that a certain proportion thereof could also be added after the addition of the filler, in particular in step (Z) (productive mixing step in the third aspect of the invention), at the time of adding fast or ultra-fast vulcanization accelerator. Preferably, at least 50 wt%, more preferably at least 80 wt% and even more preferably all of the slow or semi-fast vulcanization accelerator is added in step (A), prior to the addition of the filler.

The slow or semi-fast vulcanization accelerator can be added in step (A) in various ways. For example, it could be added as such, or as a blend with another component, such as a blend with PEG or a predispersed chemical in elastomer binder.

In the present invention, the fast or ultra-fast vulcanization accelerator (iv) is one or more selected from the group consisting of dithiocarbamate-type accelerators, thiurame-type accelerators, thiourea-type accelerators and dithiophosphate-type accelerators, including one or more selected from the group consisting of ZDMC, ZDEC, ZDBC, ZBED, ZDBCX, CuDD, TDEC, SAA-30, ZBEC, ZEPC, TMTD, TMTM, TETD, DPTT, TBzTD, IBTD, MPTD, TBTD, ZAT, ETU, DETU and DPTU.

The intermediate rubber composite produced in and obtainable/obtained by the method of the first aspect of the present invention does not contain fast or ultra-fast vulcanization accelerator, and does not contain sulfur as a vulcanizing agent, either.

Preferred combinations of PEG and slow or semi-fast vulcanization accelerator to be used in the method of the present invention include (PEG8000 + DPG), (PEG8000 + DOTG), (PEG8000 + OTBG), (PEG8000 + CBS), (PEG8000 + TBBS), (PEG8000 + MBS), (PEG8000 + DCBS), (PEG8000 + DEBS), (PEG8000 + MBT), (PEG8000 + MBTS), (PEG8000 + ZMBT), (PEG2000 + DPG), (PEG2000 + DOTG), (PEG2000 + OTBG), (PEG2000 + CBS), (PEG2000 + TBBS), (PEG2000 + MBS), (PEG2000 + DCBS), (PEG2000 + DEBS), (PEG2000 + MBT), (PEG2000 + MBTS), (PEG2000 + ZMBT), (PEG1500 + DPG), (PEG1500 + DOTG), (PEG1500 + OTBG), (PEG1500 + CBS), (PEG1500 + TBBS), (PEG1500 + MBS), (PEG1500 + DCBS), (PEG1500 + DEBS), (PEG1500 + MBT), (PEG1500 + MBTS), (PEG1500 + ZMBT), (PEG600 + DPG), (PEG600 + DOTG), (PEG600 + OTBG), (PEG600 + CBS), (PEG600 + TBBS), (PEG600 + MBS), (PEG600 + DCBS), (PEG600 + DEBS), (PEG600 + MBT), (PEG600 + MBTS), (PEG600 + ZMBT), (PEG200 + DPG), (PEG200 + DOTG), (PEG200 + OTBG), (PEG200 + CBS), (PEG200 + TBBS), (PEG200 + MBS), (PEG200 + DCBS), (PEG200 + DEBS), (PEG200 + MBT), (PEG200 + MBTS) and (PEG200 + ZMBT).

### FURTHER COMPONENTS

In the method of present invention, one or more further components which are conventionally used in the manufacture or rubber composites can be added, in step (A), e.g., prior to, together with or after the filler (ii), or in a subsequent mixing step. They can be used in amounts in accordance with ordinary practice in this art.

Such further components include, but are not limited to:
(vii) Modifying agents such as filler-modifying agents and polymer-filler coupling agents. A modifying agent as used herein will usually react in a statistical manner with the rubber component and/or the filler, especially with silica, when processed in a mechanical mixing process, thus forming covalent bonds with the filler or between polymer and filler.

Typical modifying and coupling agents are silanes, including monofunctional alkylsilanes, bifunctional silanes and blocked mercaptosilanes such as Si75®. Silanes are preferably used in a total amount ranging from 7 to 13 phf (parts per hundred parts of filler), more preferably from 8.4 to 10 phf.
(viii) Activators, including metal oxides such as zinc oxide, organic acids such as stearic acid, oleic acid and palmitic acid, fatty acid salts such as combinations of zinc salts and unsaturated fatty acids, calcium soap of fatty acids, and zinc soap of unsaturated fatty acids.
(ix) Age resistors, including antioxidants and antiozonants.
(x) Further processing aids, including mineral oils (paraffinic (PAR), naphthenic (NAP), mild extracted solvent (MES), treated distilled aromatic extract (TDAE), residual aromatic extract (RAE)), softeners (for example based on polyalkylbenzene), liquid polymers (liquid polybutadiene, liquid styrene butadiene copolymer), and waxes.

Yet further components include, e.g., resins conventionally used in this field, such as rosin, phenolic, terpene phenolic, coumarone-indene, aliphatic hydrocarbon resins, aromatic hydrocarbon resins, modified aliphatic resins, and polyterpene.

### STEP (A)

Step (A) of the method of producing an intermediate rubber composite or vulcanizable rubber composite comprises providing the rubber component (i), adding filler (ii) and mixing the rubber component (i) and filler (ii) to obtain an intermediate rubber composite. In accordance with the present invention, polyethylene glycol (PEG) and slow or semi-fast vulcanization accelerator are added to and mixed with the rubber component prior to the addition of the filler. Step (A) can be carried out in equipment and under conditions as are conventional in this art when contacting and mixing a rubber component and filler in order to produce an intermediate rubber composite. After adding PEG and slow or semi-fast vulcanization accelerator to the rubber component, mixing is carried out for a time and under conditions which are sufficient to allow the accelerator to interact with the filler surface. Usually, the mixing time is from 2 to 10 minutes, preferably from 3 to 8 minutes.

### FURTHER PROCESSING STEPS

The method of preparing an intermediate or vulcanizable rubber composite of the present invention may include further processing steps, as are conventional in the field or manufacture or rubber composites. For example, step (A) of the first aspect of the invention may be followed by a step (B) of storing the intermediate rubber composite obtained in step (A), followed by mixing. Such a step (B) allows for cooling down, relaxation and diffusion processes, and the storing could be from several hours up to a few days, for example from 2 hours to 3 days, or from 3 to 24 hours, or from 5 to 12 hours.

### VULCANIZATION

In the present invention, sulfur is used as a vulcanizing agent, as is conventional in this art. Using conditions and machinery in accordance with conventional practice in in this field, the vulcanizable rubber composite of the fourth aspect of the invention can be molded and heat-cured to obtain a cured rubber article.

### CURED RUBBER ARTICLE

The cured rubber article according to the sixth aspect of the present invention is preferably a tire or a tire component.

### EXAMPLES

Rubber composites according to the formulations summarized in Table 1 below were produced in an internal mixer in a three-step mixing process. The compounding of mixtures was performed in a 5.5-liter Francis Shaw K1 intermesh lab kneader. In the first mixing step, Tmax was between 144 and 150 °C, the mass temperature was above 140 °C for at least 2 minutes. Further mixing conditions are summarized in Table 2.

After the first mixing step, the intermediate rubber composite was cooled down on a two-roll mill and stored for relaxation before performing the second mixing step and adding the vulcanization system in the third mixing step.

Compound viscosities of raw mixtures (intermediate rubber composites; in mixing steps 1 and 2) and of vulcanizable rubber composites (in mixing step 3) were measured according to ASTM D 1646 with a Mooney rheometer (MV 2000) (see Table 3).

The vulcanization behavior was estimated according to ASTM D 5289 with a rotor-less shear rheometer (MDR 2000 E). Test pieces were vulcanized to t95 at 160 °C (and to t95 + 5 minutes for hardness and rebound resilience). Tensile strength and moduli were measured according to ASTM D412 on a Zwick Z010 tensile tester. DIN abrasion was measured according to DIN 53516 (1987-06-01). Hardness Shore A (ASTM D 2240) and rebound resilience (ISO 4662) were measured at 0 °C, room temperature (ca. 20 °C) and 60 °C. Dynamic properties, i.e. tan δ at 0 °C and 60 °C, were measured with a dynamic spectrometer Eplexor 150N/500N manufactured by Gabo Qualimeter Testanlagen GmbH (Germany), applying a static strain of 10% and a dynamic strain of 1% at a frequency of 10 Hz. Tear strength properties for Trouser samples were analyzed according ASTM D624. The experimental results are summarized in Table 4.

Formulations 1 and 2 are comparative or reference examples, while Formulation 3 is an example in accordance with the present invention.

**Table 1: Formulation of exemplary rubber composites (1: high-cis BR; 2: silica, CTAB = 160 m²/g; 3: silane; 4: hydrocarbon resin; 5: antioxidant; 6: wax; 7: process oil)**

| **Mixing Step** | **Component** | **Formulation 1** | **Formulation 2** | **Formulation 3** |
|---|---|---|---|---|
| 1 | Functionalized S-SBR | 80 | 80 | 80 |
| | ¹Buna® cis 132 | 20 | 20 | 20 |
| | DPG | - | 2 | 2 |
| | Stearic Acid | - | 1.4 | 1.4 |
| | PEG 1500 | - | - | 5 |
| | ²Ultrasil® 7000GR | 100 | 100 | 100 |
| | ³Si75®, Evonik) | 8.76 | 8.76 | 8.76 |
| | ⁴Kristallex F85 | 8 | 8 | 8 |
| | Stearic Acid | 2.1 | 0.7 | 0.7 |
| | ⁵ASM 6PPDd | 2 | 2 | 2 |
| | Zinc Oxide | 2.5 | 2.5 | 2.5 |
| | ⁶Antilux 654 | 1.5 | 1.5 | 1.5 |
| | ⁷TDAE Vivatec500 | 30 | 30 | 25 |
| 3 | Sulfur | 1.4 | 1.4 | 1.4 |
| | TBBS | 1.7 | 1.7 | 1.7 |
| | DPG | 2 | 0 | 0 |

**Table 2: Compounding conditions**

| **Mixing Step** | **Fill Factor** | **Initial Kneader Temperature [°C]** | **Rotor Speed [rpm]** | **Time [minutes]** |
|---|---|---|---|---|
| 1 | 0.55 | 80 | 40 | 5:50 |
| 2 | 0.55 | 80 | 25 | 3:00 |
| 3 | 0.53 | 80 | 20 | 3:30 |

**Table 3: Processing properties (Compound Mooney viscosity; small rotor: CMS; large rotor: CML)**

| **Mixing Step** | **Test Condition** | **Formulation 1** | **Formulation 2** | **Formulation 3** |
|---|---|---|---|---|
| 1 | CMS | 95.1 | 78.6 | 70.7 |
| 2 | CMS | 101.4 | 68.8 | 54.4 |
| 3 | CMS | 86.0 | 47.6 | 37.2 |
| 3 | CML | 170.1 | 98.8 | 77.5 |

**Table 4: Physical properties**

| **Property** | **Unit** | **Formulation 1** | **Formulation 2** | **Formulation 3** |
|---|---|---|---|---|
| t50 (160 °C) | min | 9.03 | 12.26 | 8.47 |
| t95 (160 °C) | min | 21.86 | 23.24 | 22.41 |
| ML (160 °C) | dNm | 5.00 | 3.44 | 3.19 |
| MH (160 °C) | dNm | 24.57 | 21.18 | 23.49 |
| Delta M (160 °C) | dNm | 19.6 | 17.7 | 20.3 |
| TS | MPa | 20.3 | 19.5 | 20.5 |
| EB | % | 430 | 465 | 445 |
| M100 | MPa | 2.2 | 2.0 | 2.6 |
| M300 | MPa | 11.3 | 10.0 | 12.3 |
| Reinforcement Index M300/M 100 | MPa | 5.1 | 5.0 | 4.7 |
| Hardness ShA, 0 °C | | 67,5 | 66,1 | 72,1 |
| Hardness ShA, RT | | 64,3 | 62,9 | 66,9 |
| Hardness ShA, 60 °C | | 60,9 | 61,1 | 68,1 |
| Rebound, 0 °C | % | 9,6 | 7,0 | 8,8 |
| Rebound, RT | % | 27,0 | 23,6 | 28,3 |
| Rebound, 60 °C | % | 53,2 | 51,9 | 52,5 |
| E'@ -25 °C | MPa | 326,67 | 411,35 | 558,26 |
| E'@ 0 °C | MPa | 14,62 | 15,55 | 22,09 |
| E" @ 0 °C | MPa | 8,00 | 9,78 | 13,94 |
| E' @ 60 °C | MPa | 5,81 | 5,63 | 8,50 |
| E" @ 60 °C | MPa | 0,83 | 0,88 | 1,32 |
| tan d @ 0 °C | | 0,547 | 0,629 | 0,631 |
| tan d @ 60 °C | | 0,143 | 0,155 | 0,155 |
| tan d @ 0 °C / tan d @ 6 0°C | | 3,8 | 4,0 | 4,1 |
| tan dₘₐₓ | | 0,851 | 0,882 | 0,825 |
| T @ tan dₘₐₓ | °C | -14 | -12 | -12 |
| RPA tan d @ 60°C (5% strain) | | 0,141 | 0,144 | 0,125 |
| RPA tan d @ 60°C (1% strain) | | 0,124 | 0,132 | 0,115 |

## Claims

1. A method of producing an intermediate rubber composite comprising (i) a rubber component comprising one or more of natural rubber and synthetic rubber, (ii) filler, (v) polyethylene glycol (PEG), and (vi) one or more of slow and semi-fast vulcanization accelerators, and not containing (iii) sulfur and (iv) fast or ultra-fast vulcanization accelerators,
wherein the method comprises a step (A) of providing the rubber component (i), adding filler (ii) and mixing the rubber component (i) and filler (ii) to obtain the intermediate rubber composite,
**characterized in that** in step (A), polyethylene glycol (PEG) (v) and slow or semi-fast vulcanization accelerator (vi) are added to and mixed with the rubber component (i) prior to the addition of the filler (ii).

2. The method according to claim 1, which comprises a step (B) of storing the intermediate rubber composite obtained in step (A), followed by mixing.

3. The method according to claim 1 or 2, wherein, together with or after addition of the filler (ii), one or more of the group consisting of (vii) modifying agents, (viii) activators, (ix) age resistors, and (x) further processing aids are added to the rubber component (i), followed by mixing.

4. The method according to any one of claims 1 to 3, wherein the synthetic rubber is one or more selected from the group consisting of BR, IR, SIR, SBR and SIBR.

5. The method according to any one of claims 1 to 4, wherein the filler (ii) is one or more selected from the group consisting of carbon black, carbon nanotubes, graphite, graphene, silica, carbon-silica dual-phase filler, clay, calcium carbonate, magnesium carbonate, lignin and glass particle-based fillers, preferably one or more selected from the group consisting of precipitated silica and fumed silica.

6. The method according to any one of claims 1 to 5, wherein the PEG (v) has a molecular weight in the range of from 100 to 10,000 g/mol, preferably from 150 to 8,000 g/mol and more preferably from 200 to 2,000 g/mol.

7. The method according to any one of claims 1 to 6, wherein the slow or semi-fast vulcanization accelerator (vi) is one or more selected from the group consisting of guanidine-type accelerators, sulfenamide-type accelerators and thiazole-type accelerators, preferably one or more selected from the group consisting of DPG, DOTG, OTBG, CBS, TBBS, MBS, DCBS, DEBS, MBT, MBTS and ZMBT.

8. The method according to any one of claims 3 to 7, wherein
- the modifying agent (vii) is a filler-modifying agent or a polymer-filler coupling agent,
- the activator (viii) is one or more of a metal oxide and an organic acid,
- the age resistor (ix) is one or more of an antioxidant and an antiozonant, and
- the further processing aid (x) is one or more of mineral oils, softeners, liquid polymers and waxes.

9. The method according to any one of claims 1 to 8, wherein PEG is added in a total amount of from 0.5 to 10 phr, preferably from 1 to 5 phr.

10. The method according to any one of claims 1 to 10, wherein slow or semi-fast vulcanization accelerator is added in a total amount of from 1 to 10 phr, preferably from 3 to 5 phr.

11. An intermediate rubber composite comprising (i) a rubber component comprising one or more of natural rubber and synthetic rubber, (ii) filler, (v) polyethylene glycol (PEG), and (vi) one or more of slow and semi-fast vulcanization accelerators, and not containing (iii) sulfur and (iv) fast or ultra-fast vulcanization accelerators, obtainable by the method as defined in any of claims 1 to 10.

12. A method of producing a vulcanizable rubber composite comprising (i) a rubber component comprising one or more of natural rubber and synthetic rubber, (ii) filler, (iii) sulfur, (iv) one or more of fast and ultra-fast vulcanization accelerators, (v) polyethylene glycol (PEG), and (vi) one or more of slow and semi-fast vulcanization accelerators, wherein the method comprises
producing an intermediate rubber composite by conducting the method as defined in any one of claims 1 to 11 and
a step (Z) of adding sulfur (iii) and fast or ultra-fast vulcanization accelerator (iv) to the intermediate rubber composite, followed by mixing, to obtain the vulcanizable rubber composite.

13. The method according to claim 12, wherein the fast or ultra-fast vulcanization accelerator (iv) is one or more selected from the group consisting of dithiocarbamate-type accelerators, thiurame-type accelerators, thiourea-type accelerators and dithiophosphate-type accelerators, preferably one or more selected from the group consisting of ZDMC, ZDEC, ZDBC, ZBED, ZDBCX, CuDD, TDEC, SAA-30, ZBEC, ZEPC, TMTD, TMTM, TETD, DPTT, TBzTD, IBTD, MPTD, TBTD, ZAT, ETU, DETU and DPTU.

14. A vulcanizable rubber composite comprising (i) a rubber component comprising one or more of natural rubber and synthetic rubber, (ii) filler, (iii) sulfur, (iv) fast or ultra-fast vulcanization accelerator, (v) polyethylene glycol (PEG), and (vi) slow or semi-fast vulcanization accelerator, which rubber composite is obtainable by the method as defined in claim 12 or 13.

15. A method of producing a cured rubber article comprising the steps of
- producing a vulcanizable rubber composite by conducting the method as defined in claim 12 or 13,
- molding the vulcanizable rubber composite to obtain a molded rubber article, and
- curing the molded rubber article by heating to obtain a cured rubber article.

16. A cured rubber article obtainable by the method as defined in claim 15, preferably a tire or tire component.
